(19) Europäisches Patentamt
European Patent Office
Office européen des brevets

(11) **EP 2 685 292 A2**

(12) **EUROPEAN PATENT APPLICATION**

(43) Date of publication:
**15.01.2014 Bulletin 2014/03**

(21) Application number: **13175881.5**

(22) Date of filing: **10.07.2013**

(51) Int Cl.:
**G01W 1/02** (2006.01)    **G01C 21/20** (2006.01)
**G05D 1/04** (2006.01)    **G05D 1/10** (2006.01)
**G08G 5/00** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.07.2012 US 201213547878**

(71) Applicant: **General Electric Company**
**Schenectady, New York 12345 (US)**

(72) Inventors:
• **Bollapragada, Srinivas**
  **Niskayuna, NY 12309 (US)**
• **Del Amo, Ana**
  **Grand Rapids, MI Michigan 49512 (US)**

(74) Representative: **Williams, Andrew Richard**
**GPO Europe**
**GE International Inc.**
**The Ark**
**201 Talgarth Road**
**Hammersmith**
**London W6 8BJ (GB)**

(54) **Systems and methods for flight management**

(57)    Systems and methods for flight management are provided. One flight control system is provided that includes a flight management system (32) configured to manage aircraft flight control including at least one of a flight path or an altitude for an aircraft (52). The flight control system also includes a flight parameter selection module (34) configured to determine a Cost Index (CI) and cruising altitude for use by the flight management system to manage the aircraft flight control, wherein the determination is based on a flight cost and predicted weather along the flight path.

FIG. 2

EP 2 685 292 A2

**Description**

BACKGROUND

Aircraft are commonly equipped with a flight management system (FMS) for managing aircraft flight control, generating flight profile data, and providing navigational information such as flight paths designated by waypoints that are represented by navigational location coordinates. Additionally, flight management control systems are also configurable to provide aircraft engine throttle settings for manual or automatic control of the engine thrust.

The FMS computes a detailed flight trajectory and controls the navigation of the airplane. The trajectory defines the lateral and vertical profile including aircraft speeds along the profile, and is developed by the FMS using the airline flight plan and other constraints such as altitude and speed restrictions, and Cost Index (CI) which is the ratio of time cost to fuel cost. The FMS uses the current aircraft state and atmospheric data along with all crew-entered or Airline Operations Center (AOC) up-linked data to generate the trajectory. Using various sensors to determine the exact position of the aircraft, the FMS guides the aircraft along the trajectory through the Flight Control System. For example, during aircraft takeoff and cruising, the FMS may determine engine thrust requirements to sufficiently elevate the plane on lift off from the runway such that the aircraft sufficiently climbs at a pitch rate, typically according to a programmed schedule or requirements set forth by the air traffic control and then to level off and finally descend for landing.

The two main costs that are incurred on a flight are the fuel cost and the time cost. The fuel cost is proportional to the amount of fuel burnt. There is also a cost that is incurred by the aircraft if the aircraft does not arrive at the aircraft destination at the scheduled time. The costs depend on the airline operation schedules and can be different for early and late arrivals. In general, the costs are nonlinear in the deviation of the arrival time from the scheduled time. The total cost incurred on a flight can vary significantly based on the flight parameters that are chosen. However, in conventional systems, the initial flight parameters are set and not changed during flight to adjust for different conditions or circumstances. A number of these exogenous factors affect the costs incurred on a flight. For example, weather can have a significant impact on flight costs. Specifically, the fuel consumed on a flight and the flight times are significantly impacted by wind speeds, directions and also by atmospheric temperature.

Thus, conventional flight planning systems choose the optimal lateral route for a flight, which includes the selection of the cost index. However, many of the flight parameters, including the cost index, are fixed and do not account for different weather conditions. Thus, these conventional systems are inefficiently used, which adds costs to the overall flight.

BRIEF DESCRIPTION

In one embodiment, a flight control system is provided that includes a flight management system configured to manage aircraft flight control including at least one of a flight path or an altitude for an aircraft. The flight control system also includes a flight parameter selection module configured to determine a Cost Index (CI) and cruising altitude for use by the flight management system to manage the aircraft flight control, wherein the determination is based on a flight cost and predicted weather along the flight path.

In another embodiment, an aircraft is provided that includes an airframe and a flight management system on-board the airframe configured to manage aircraft flight control including at least one of a flight path or an altitude. A flight parameter selection module is also provided and configured to determine a Cost Index (CI) and cruising altitude for use by the flight management system to manage the aircraft flight control, wherein the determination is based on a flight cost and predicted weather along the flight path.

BRIEF DESCRIPTION OF THE DRAWINGS

Figure 1 is a graph illustrating an example of flight cost as a function of a Cost Index (CI) value for different cruising altitudes.

Figure 2 is a simplified block diagram of a decision support system in accordance with various embodiments.

Figure 3 is a graph illustrating different climb curves including a step climb schedule in accordance with various embodiments.

Figure 4 is a diagram illustrating control of an aircraft using various embodiments.

Figure 5 is a diagram of a flight management system (FMS) in accordance with various embodiments.

Figure 6 is a block diagram of a flight parameter selection module in accordance with various embodiments.

Figure 7 is a graph illustrating a Cost Index (CI) search performed in accordance with various embodiments.

Figure 8 is a flowchart of a method for determining a CI value or cruising altitude in accordance with various embodiments.

Figure 9 is a flowchart of a method for determining both a CI value and a cruise altitude in accordance with various embodiments.

Figure 10 is a diagram illustrating a search over a cost index in accordance with various embodiments.

Figure 11 is a diagram illustrating a nested search in accordance with various embodiments.

DETAILED DESCRIPTION

The following detailed description of certain embodiments will be better understood when read in conjunction with the appended drawings. It should be understood that the various embodiments are not limited to the arrangements and instrumentality shown in the drawings.

As used herein, an element or step recited in the singular and proceeded with the word "a" or "an" should be understood as not excluding plural of said elements or steps, unless such exclusion is explicitly stated. Furthermore, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

Various embodiments of systems and methods are provided for selecting a Cost Index (CI) and vertical profiles for a given flight. At least one technical effect of various embodiments is a reduction in operating costs for flights. Using various embodiments, airline flight planners may determine an improved or optimal flight plan for each individual flight.

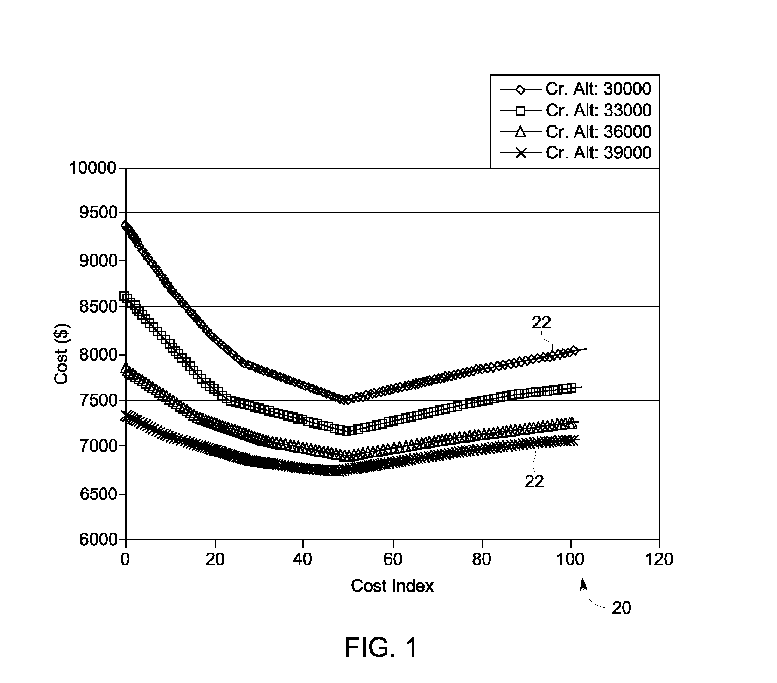

In various embodiments, using weather forecast information, a CI, cruise altitude and/or lateral route to be used by a flight management system (FMS) is selected to reduce and/or minimize flight cost including accounting for fuel and time factors. Accordingly, some embodiments select a cruise altitude or multiple cruise altitudes for a flight. For example, the total cost incurred on a flight can vary based on the flight parameters selected for the flight as illustrated in Figure 1 showing a graph 20 of simulated data for flight cost (on the vertical axis) versus CI (on the horizontal axis). As can be seen by the curves 22 (for the simulated data), representing different cruise altitudes, the cost varies based on the CI and the altitude of the aircraft.

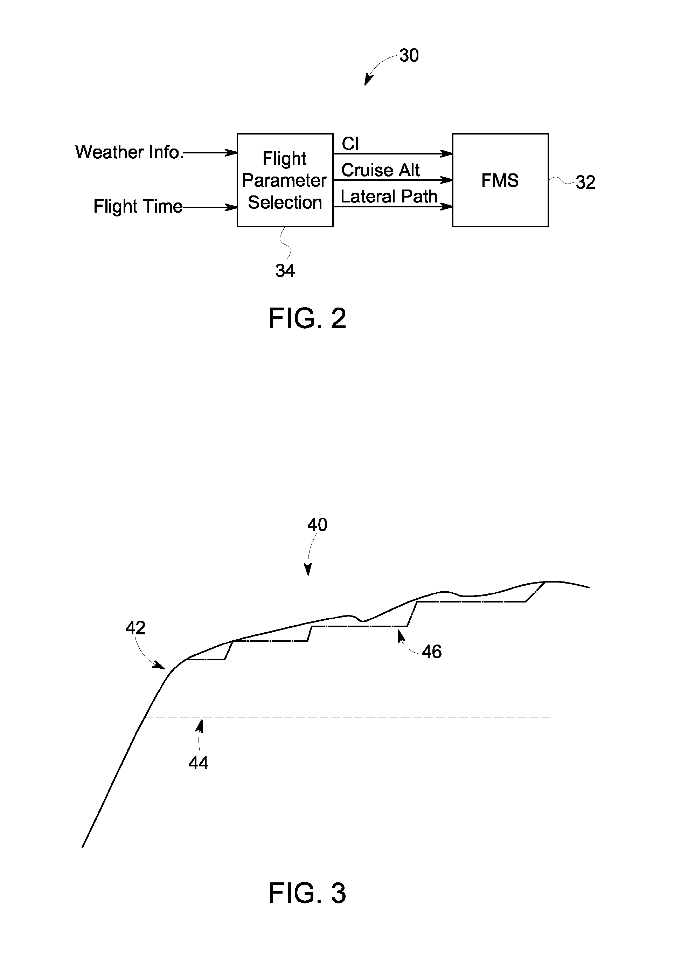

In accordance with various embodiments, the CI (for the FMS), cruise altitude and/or lateral route may be selected for different portions of the flight. In some embodiments, changes to one or more of these parameters is based on weather conditions (e.g., predicted or forecasted wind and temperature) at different locations along the flight path and the lateral path of flight. For example, as shown in Figure 2, a decision support system 30 may be provided to select the parameters for an FMS 32, which may be fixed or changed dynamically during the flight. The FMS 32 receives initial and optionally updated parameter information from a flight parameter selection module 34. In various embodiments, as described in more detail herein, weather information and/or flight time information (e.g., departure time, current time, and/or estimated arrival time) are received by the flight parameter selection module 34, which outputs control parameters to the FMS 32. For example, a CI value, cruise altitude and/or lateral flight path may be set or updated using the flight parameter selection module 34. The flight parameter selection module 34 may be implemented in hardware, software or a combination thereof.

In particular, the graph 40 of Figure 3 illustrates a theoretical optimal continuous climb curve 42 for an aircraft, which includes a continuous thrust setting with actual altitude fluctuations as the wind and temperature vary. The curve 44 represents a constant altitude cruise wherein only one wind level is used by the FMS 32. Thus, the curve 44 does not account or calculate for a wind-optimal cruise altitude or optimal step climb point based on, for example, winds and the weight of the vehicle. In accordance with various embodiments, a step climb schedule, such as represented by the curve 46 is determined and used to control the FMS 32. For example, in various embodiments, the theoretical optimal (represented by the curve 42) is approximated by a series of step climbs (which may include updated CI values) based on wind and temperature variation during flight (and optionally flight timing information) in three or four dimensions as described in more detail herein. The step climbs in various embodiments are provided to be compatible with Air Traffic Control (ATC) procedures and on-board guidance.

Thus, the theoretical optimal cruise profile represented by the curve 42 uses a continuous thrust setting, such as on an auto-throttle, which will result in a continuously climbing profile, with a decreasing rate of climb as the maximum altitude is approached. This maximum altitude increases as the aircraft gross weight decreases, until the absolute maximum flight level is reached. The stable cruising trajectory at this point would not be at a fixed altitude, but would vary as ambient wind and temperature conditions change, impacting that actual thrust achieved. In accordance with various embodiments, an approximation to this optimal curve 42 (represented by the curve 46) may be achieved by the use of intermediate step climbs (and changes in CI value) during the en-route cruise phase of the aircraft.

Various embodiments provide one or more algorithms that select an optimal or approximated optimal cruise altitude profile (including the initial cruise altitude and locations for intermediate step climbs or step descents) and the optimal or approximated CI values for forecast wind and temperature conditions. In some embodiments, the algorithm(s) compute flight plans given lateral flight data, fuel costs, scheduled times of departures and arrivals, and the associated earliness and tardiness costs. In operation, various embodiments may be used, for example, by commercial airline operating centers to plan flights including determining step climb and descents. In some embodiments, a simulation analysis capability may be provided to study the impact of weather / wind and temperature forecast accuracy on flight time and fuel consumption. The simulation may be used to make recommendations on augmenting the use of wind temperature along the flight and to increase or decrease the amount of fuel carried based on weather conditions.

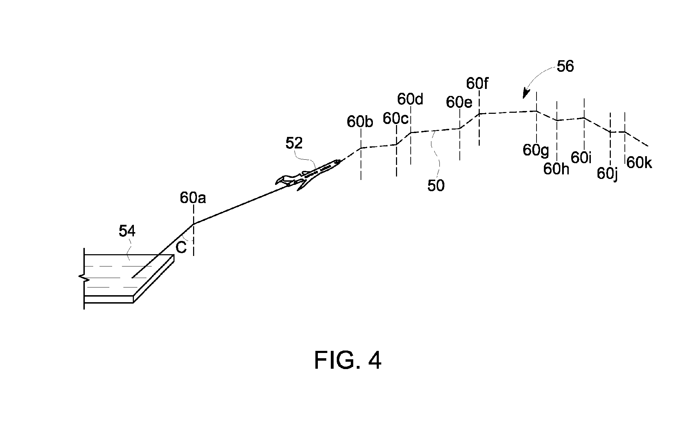

In particular, Figure 4 illustrates flight control of an aircraft 52 along a flight climb schedule (represented by the step climb curve 50). The departure of the aircraft 52 from an airport runway 54 is generally illustrated according to an aircraft climb and cruise profile 56 (represented by the curve 50) realized by a variable engine thrust, which may include changes to the CI value and lateral flight path. The aircraft 52 may be, for example, a jet propelled and propeller driven aircraft.

During takeoff or departure from an airport runway 54, the aircraft 52 accelerates, typically at full power, with aircraft flaps set in the takeoff position such that the aircraft lifts off from the runway at an initial climb rate (pitch rate) on a path and climb angle C. The aircraft climb rate and cruising altitude of the aircraft 52 may vary depending upon size and weight of the aircraft, engine thrust, and atmospheric conditions such as temperature, wind, and other variables, which vary throughout the flight. For example, in accordance with various embodiments, the cruising altitude of the aircraft 52, as well as the lateral flight path and CI values are set or changed for one or more waypoints 60, which may be preset and/or updated dynamically during flight. Thus, various embodiments provide initial (as well as optionally updated) CI, lateral and vertical profiles for a flight of the aircraft 52, which may change, for example, based on forecasted weather conditions. Thus, different control parameters input to the FMS 32 may be varied, which can cause a change in the thrust of the aircraft 52, as well as the direction of travel of the aircraft 52.

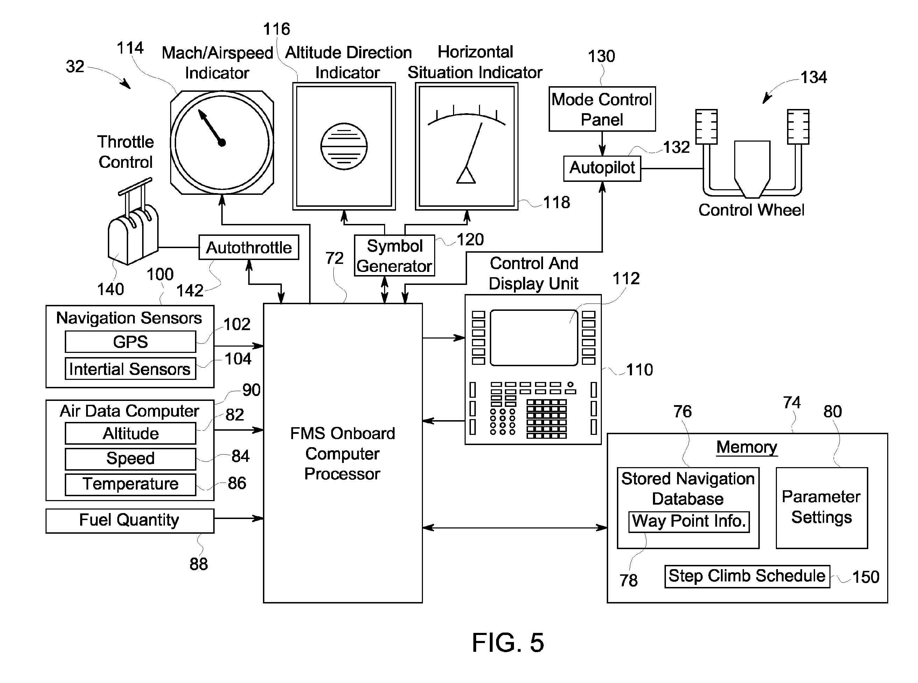

Figure 5 illustrates one embodiment of the FMS 32 that may be used with various embodiments to receive selected flight parameters to control the flight of the aircraft 52. In the illustrated embodiment, the FMS 32 includes an FMS onboard computer processor 72 and a memory 74. The memory 74 includes a stored navigation database 76 that stores aircraft navigation information including determined waypoint information 78, which may be points along the flight plan where one or more of the CI, lateral and vertical profiles for a flight of the aircraft 52 is changed. Thus, the memory 74 may include navigational waypoints and corresponding aircraft control parameters 80 to be changed by the FMS onboard computer processor 72 during flight as determined by one or more various embodiments, such as using the flight parameter selection module 34 (shown in Figure 2).

The onboard computer processor 72 receives various inputs including sensed aircraft altitude 82, sensed aircraft speed 84, and sensed air temperature 86 from an air data computer 90. Additionally, the processor 72 receives inputs from navigation sensors 100, such as location coordinates from a global positioning system (GPS) 102 and inertial data from inertial sensors 104. Further, the processor 72 receives other inputs from other sensors such as fuel quantity 88, and other sensed variables as should be evident to those skilled in the art.

The onboard computer processor 72 is further shown in communication with a control and display unit (CDU) 110 having a display 112. It should be appreciated that the control and display unit 110 in various embodiments is a human machine interface that allows pilots to input data and to receive output data. For example, output data indicating the computed engine thrust may be provided in display pages presented on display 112 to allow a pilot of the aircraft to operate the aircraft pursuant to the output data provided by the flight management system 32.

The FMS 32 is further shown having a mach/airspeed indicator 114, an altitude direction indicator 116, and a horizontal situation indicator 118. A symbol generator 120 is coupled between the processor 72 and each of the indicators 116 and 118. The FMS 32 also includes a mode control panel 130 providing an output to an autopilot 132, which is also in communication with the processor 72. The autopilot 132 may be part of a flight control system and may operate a control wheel 134 in an automatic piloting mode.

The FMS 32 is further shown including a throttle control 140 for controlling the engine throttle, as should be evident to those skilled in the art. The throttle control 140 may be manually actuated by a pilot of the aircraft in a manual mode. In an automatic flight control mode, the throttle control 140 may be automatically controlled by an auto throttle signal 142 provided by the processor 72. It should be appreciated that the processor 72 may output command signals for controlling the aircraft with the computed throttle value by providing output commands via the display 112 or by automatically controlling the throttle control 140 via the auto throttle signal 142.

The FMS 32 shown and described herein is one embodiment of a flight management system that may be configured to perform various embodiments to control an aircraft during aircraft departure, cruising and arrival procedures. In some embodiments, a step climb schedule, such as illustrated by the curve 46 (shown in Figure 3), which may be stored in one or more tables, is stored in the memory 74. It should be appreciated that the memory 74 and the stored navigation database 76 may include an existing navigation database in an existing flight management system that is upgraded to perform the climb schedule or use one or more embodiments.

In operation, various embodiments select cruise altitudes and CI values to reduce or minimize flight costs, such as based on actual or predicted changes in weather, and other factors (e.g., flight time information).

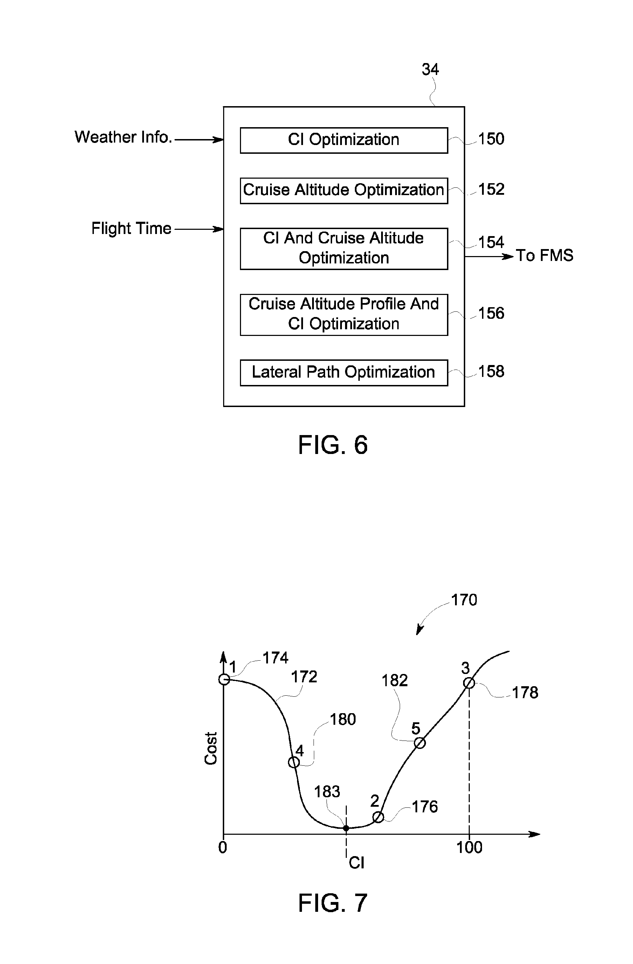

For example, the flight parameter selection module 34, as shown in Figure 6 may select one or more algorithms, which may be optimizing and heuristic algorithms for determining the parameters to send to the FMS 32 (shown in Figures 2 and 5).

During aircraft operation, depending on the stage of the flight, it may not be possible to optimally choose all the parameters. For example, in some situations, the cruise altitude of a flight may not be changed because of ATC clearance issues, but using various embodiments, the CI may be modified to reduce or minimize costs, such as associated with the use of fuel. The flight parameter selection module 34 may select one or more algorithms (illustrated as modules in Figure 5) to control the flight of the aircraft. In some embodiments, the flight parameter selection module 34 may selected from the following algorithms:

CI Optimization Algorithm 150: Determines CI while fixing all other flight parameters including cruise altitude, lateral waypoints, etc.

Cruise Altitude Optimization Algorithm 152: Determines a single cruise altitude for the entire flight.

CI and Cruise Altitude Optimization Algorithm 154: Determines both CI and a single cruise altitude for the entire flight.

Cruise Altitude Profile and CI Optimization Algorithm 156: Determines a cruise altitude profile (including the initial cruise altitude and optimal locations for intermediate step climbs or step descents) and the CI.

Lateral Path Optimization Algorithm 158: Determines lateral way points from a set of possible points while also determining CI and/or cruse altitudes as described in the algorithms 150, 152, 154, 156.

The various algorithms will now be described. It should be noted that the algorithms described herein are merely for example and different algorithms may be used. Accordingly, other algorithms or methods may be used to determine CI, lateral profiles and/or vertical profiles for a flight of the aircraft 52.

The CI Optimization Algorithm 150 determines a CI, such as to minimize a total flight cost. In particular, the CI Optimization Algorithm 150 uses a golden section search algorithm as illustrated in the graph 170 of Figure 7. The graph 170 illustrates a curve 172 wherein the horizontal axis corresponds to a CI value and the vertical axis corresponds to cost. In this embodiment, minimum and maximum CI values are specified (illustrated as 0 and 100) and the cruise altitude, flight path and all other FMS input parameters are known (such as from a flight planning procedure). Also, the FMS 32 may be used to obtain trip fuel and trip time information, with the total cost (based on time and fuel) estimated using the cost function represented by the curve 172. It should be noted that range of values for the CI may be varied.

The golden search section finds the extremum (maximum or minimum) of a unimodal function by successively narrowing the range of values inside which the extremum is known to exist (e.g., between the selected range of CI values). The CI Optimization Algorithm 150 uses the golden search section to maintain the function values for triples of points having distances that form a golden ratio. A golden ratio ($\varphi$) in various embodiments is determined if the ratio of the sum of two quantities to the larger quantity is equal to the ratio of the larger quantity to the lower quantity, which may be defined as: (a+b)/a = a/b = $\varphi$, where a and b are the values (e.g., CI values). In operation, $\varphi$ represents the golden ratio when $\varphi$ has a value of:

$$\varphi = \frac{1 + \sqrt{5}}{2} :$$

which is approximately equal to 1.618.

In some embodiments, in order to increase the search speed for the CI value, the new point is selected away from a midpoint at a distance equal to:

$$(3 - \sqrt{5})/2$$

For example, in the illustrated embodiment, an initial point 174 is selected at a CI value of zero. Using the golden section search, the points 176, 178, 180 and 182 are then successively determined or evaluated. It should be noted that in some embodiments, a plurality of points are used to determine a minimum CI value using the golden section search. For example, in various embodiments, 5-10 points are used. However, it should be noted that additional or fewer points may be used.

Thus, based on a defined CI range and using fuel burned and time to destination information from the FMS onboard computer processor 72 (shown in Figure 5), a CI value may be determined, which is then used by the FMS onboard computer processor 72 for the entire flight. The CI value reduces or minimizes the flight cost, which in various embodiments includes the cost of fuel and the time based cost of the flight (e.g., early or late arrival), which also includes the forecasted weather conditions, such as the forecasted wind and temperature along the selected flight route. For example, based on one or more points along the flight path (or an average thereof), the cost may be determined based on the amount of fuel that will be used during the scheduled flight time taking into consideration the forecasted weather. It should be noted that the amount of fuel that will be burned based on these factors may be determined using any suitable method. Accordingly, the curve 172 representing a CI profile may be generated using the determined CI values at each of the points 174, 176, 178, 180, 182, such as extrapolating the curve between the points 174, 176, 178, 180, 182. A minimum value at point 183 then may be determined, which defines a corresponding CI value.

The Cruise Altitude Optimization Algorithm 152 operates similar to the CI Optimization Algorithm 150. In particular, the Cruise Altitude Optimization Algorithm 152 uses a golden section search to determine a single cruise altitude for the entire flight. Accordingly, instead of defining a range of CI values, a range of cruising altitude values are defined, such as between 30,000 feet and 40,000 feet. However, it should be appreciated that the range may be varied.

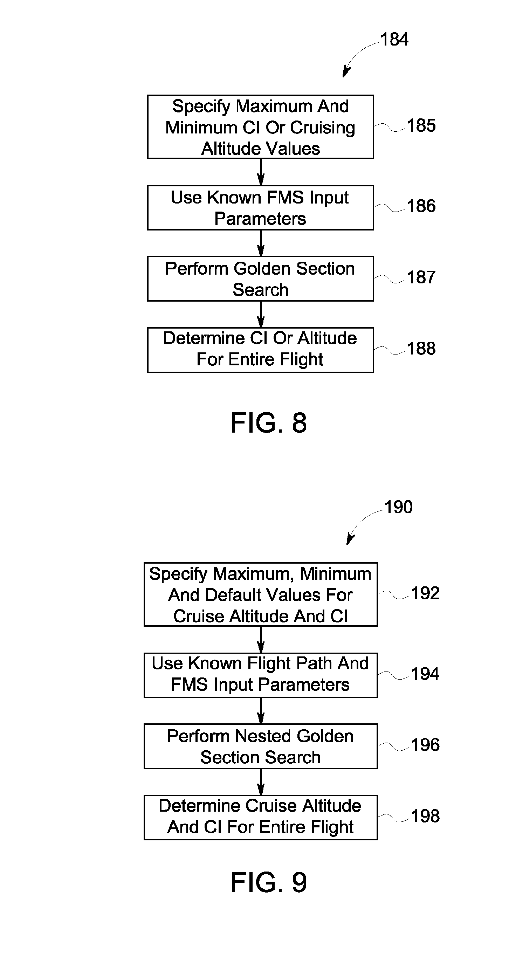

Thus, a method 184 is provided in accordance with various embodiments for determining the CI value or cruising altitude for a flight as shown in Figure 8. In particular, a maximum and minimum value for CI or the cruising altitude is specified at 185, which may be predetermined or defined by a user. Thereafter, known FMS input parameters are used at 186, such as a determined cruise altitude (if finding the CI), flight path and all other FMS input parameters, which may be based on predicted weather conditions (wind and temperature) at locations along the flight path and the lateral path of the flight to determine flight cost. A golden section search is then performed at 187 as described herein to determine at 188 a CI value and/or cruising altitude for the entire flight.

Thus, the CI Optimization Algorithm 150 selects the CI to reduce or minimize total flight cost given upper and lower bounds on CI, the desired cruise altitude, and lateral flight path. The golden section search is used to search the space to pick the value (e.g., optimal value) for CI that reduces or minimizes the total flight cost. The Cruise Altitude Optimization Algorithm 152 selects the cruise altitude for the entire flight to reduce or minimize total flight cost given upper and lower bounds on the altitude, the desired cost index, and lateral flight path. The golden section search method searches the space to select the value for CI or cruise altitude that reduces or minimizes the total flight cost.

The CI and Cruise Altitude Optimization Algorithm 154 determines both the CI and a single cruise altitude for the entire flight. In this embodiment, the cruise altitude and CI are selected to reduce or minimize the flight cost. In particular, a method 190 as shown in Figure 9 may be provided wherein the range of values (minimum and maximum) and default values (to start the determination) are defined or specified for cruising altitude and CI at 192. In this embodiment, the flight path and all other FMS parameters are known and used at 194, which may be based on predicted weather conditions (wind and temperature) at locations along the flight path and the lateral path of the flight, to determine flight cost.

A nested golden section search is then performed 196. In particular, one golden section search is performed within another golden section search, for example, a golden section search for a CI value is performed within a golden section search for a cruising altitude value. For example, an optimized or reduced CI is searched for using the golden section search for a particular cruising altitude, which may be determined from another golden section search. Thus, a golden section search for CI may be nested within a golden section search for altitude. It should be noted that the and Cruise Altitude Optimization Algorithm 154 may be used to determine the CI and cruising altitude values a different points along a planned flight path at 198. Additionally, in some embodiments, the CI and cruising altitude values may be determined, such that based on a predicted change in head winds at a particular waypoint, a determination of a different CI and cruising altitude may be determined. Thus, the CI and Cruise Altitude Optimization Algorithm 154 in various embodiments may optimally select both the cruise altitude and the CI for the entire flight to minimize total flight cost or for portions of the flight as described in more detail below.

For example, various embodiments provide the Cruise Altitude Profile and CI Optimization Algorithm 156 to determine a cruise altitude profile (including the initial cruise altitude and optimal locations for intermediate step climbs or step descents) and the CI. In this embodiment, the CI and Cruise Altitude Optimization Algorithm 154 is implemented at different locations along the flight path. For example, the Cruise Altitude Profile and CI Optimization Algorithm 156 determines locations for intermediate steps or climbs, such as to determine a cruise altitude at which to climb (or descend) to each location. Additionally, a CI value at each step also may be determined or a CI value for the entire flight may be determined. For example, a nested golden section search may be used as described herein for the entire flight or for each segment defined by the intermediate steps or climbs.

In this embodiment, a plurality of waypoints along the route are selected, for example, at desired intervals, which may be at predetermined intervals, which may be varied, equal, or based on different factors (e.g., forecasted weather, fuel used, etc.). Thus, the cruising altitude and CI values are determined at different waypoints, which may be performed using a nested golden section search. However, the various embodiments use a forward planning algorithm for solving a dynamic problem. In particular, at each waypoint a determination is made for the particular segment, as well as using future forecasted information at the additional waypoints that will occur thereafter. Thus, using flight planning information and forecasted weather conditions, the various embodiments determine the cruising altitude and CI values along the flight route at different waypoints.

It should be noted that determination of CI values and/or altitude values in various embodiments is performed before takeoff or early in the flight. However, the various embodiments may be implemented at different points within the flight, for example, if a determination is made that the forecasted weather conditions have changed (e.g., a significant storm prediction change).

Thus, the Cruise Altitude Profile and CI Optimization Algorithm 156 may optimally select both the CI and the cruise altitude by waypoint assuming step climbs and descents when the altitude changes. In various embodiments, an optimization problem (as the decision to change altitude at a waypoint is also influenced by altitude decisions at future waypoints) is modeled as a dynamic program and a forward planning algorithm is used, such as using a nested golden section search for each segment. The forward planning dynamic program determines, for example, the optimal cruise altitude at each waypoint after approximating the cost for the rest of the flight.

The Lateral Path Optimization Algorithm 158 determines lateral waypoints from a set of possible waypoints while also determining CI and/or cruse altitudes as described in the other algorithms 150, 152, 154, 156. Similar to other embodiments described herein, a nested golden section search may be used.

Thus, various embodiments determine CI, lateral and vertical values or profiles for a flight (including initial and optimal locations for intermediate steps) for forecasted weather conditions, such as forecasted wind and temperature conditions. The various embodiments may be implemented as an electronic tool that can be used to compute optimal flight plans given lateral flight data, fuel costs, scheduled times of departures and arrivals, and the associated earliness and tardiness costs. The various embodiments may be used to determine optimal step climbs and or descents or optimally plan flights, including fictitious waypoints where additional wind and temperature data has been entered. In addition, various embodiments may use simulation analysis capability to study the impact of weather and/or wind and temperature forecast accuracy on flight time and fuel consumption that can be used to make recommendations on augmenting the use of wind temperature along the flight, and increase or decrease the amount of fuel based on weather.

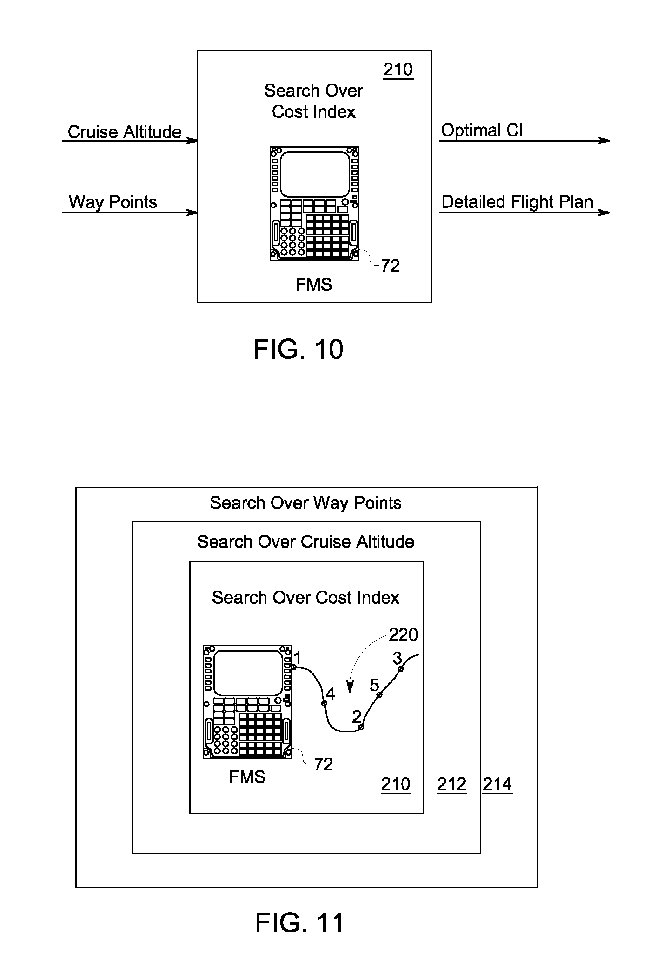

For example, as shown in Figure 10, cruise altitude and way point information received by the FMS 32, in particular the FMS onboard computer processor 72, as part of a flight planning process using a known flight planning process of the art, is then used to determine a CI value and detailed flight plan. In various embodiments a cost search 210 over a range of CI values may be performed, such as using a golden section search 220. In other embodiments, a nested search may be performed as shown in Figure 11. For example, the cost search 210 over a range of CI values may be performed or nested within a cost search 212 over a range of cruising altitudes, which optionally may be performed nested within a cost search 214 over a plurality of waypoints 216.

It should be noted that the various embodiments may be implemented in hardware, software or a combination thereof. The various embodiments and/or components, for example, the modules, or components and controllers therein, also may be implemented as part of one or more computers or processors. The computer or processor may include a computing device, an input device, a display unit and an interface, for example, for accessing the Internet. The computer or processor may include a microprocessor. The microprocessor may be connected to a communication bus. The computer or processor may also include a memory. The memory may include Random Access Memory (RAM) and Read Only Memory (ROM). The computer or processor further may include a storage device, which may be a hard disk drive or a removable storage drive such as a solid state drive, optical disk drive, and the like. The storage device may also be other similar means for loading computer programs or other instructions into the computer or processor.

As used herein, the term "computer" or "module" may include any processor-based or microprocessor-based system including systems using microcontrollers, reduced instruction set computers (RISC), ASICs, logic circuits, and any other circuit or processor capable of executing the functions described herein. The above examples are exemplary only, and are thus not intended to limit in any way the definition and/or meaning of the term "computer".

The computer or processor executes a set of instructions that are stored in one or more storage elements, in order to process input data. The storage elements may also store data or other information as desired or needed. The storage element may be in the form of an information source or a physical memory element within a processing machine.

The set of instructions may include various commands that instruct the computer or processor as a processing machine to perform specific operations such as the methods and processes of the various embodiments of the invention. The set of instructions may be in the form of a software program. The software may be in various forms such as system software or application software and which may be embodied as a tangible and non-transitory computer readable medium. Further, the software may be in the form of a collection of separate programs or modules, a program module within a larger program or a portion of a program module. The software also may include modular programming in the form of object-oriented programming. The processing of input data by the processing machine may be in response to operator commands, or in response to results of previous processing, or in response to a request made by another processing machine.

As used herein, the terms "software" and "firmware" are interchangeable, and include any computer program stored in memory for execution by a computer, including RAM memory, ROM memory, EPROM memory, EEPROM memory, and non-volatile RAM (NVRAM) memory. The above memory types are exemplary only, and are thus not limiting as to the types of memory usable for storage of a computer program.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the invention without departing from its scope. Dimensions, types of materials, orientations of the various components, and the number and positions of the various components described herein are intended to define parameters of certain embodiments, and are by no means limiting and are merely exemplary embodiments. Many other embodiments and modifications within the spirit and scope of the claims will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects.

Various aspects and embodiments of the present invention are defined by the following numbered clauses:

1. A flight control system comprising:

a flight management system configured to manage aircraft flight control including at least one of a flight path or an altitude for an aircraft; and

a flight parameter selection module configured to determine a Cost Index (CI) and cruising altitude for use by the flight management system to manage the aircraft flight control, the determination based on a flight cost and predicted weather along the flight path.

2. The flight control system of clause 1, wherein the flight parameter selection module is further configured to perform a golden section search to determine one of the CI or the cruising altitude.

3. The flight control system of any preceding clause, wherein the flight parameter selection module is further configured to perform a nested golden section search to determine the CI and cruising altitude.

4. The flight control system of any preceding clause, wherein the flight parameter selection module is further configured to determine a step climb schedule for the altitude of the aircraft based on the predicted weather.

5. The flight control system of any preceding clause, wherein the flight parameter selection module is further configured to determine the CI and cruising altitude at a plurality of waypoints along the flight path.

6. The flight control system of any preceding clause, wherein the flight parameter selection module is further configured to use fuel consumption and flight time information when determining the CI and cruising altitude.

7. The flight control system of any preceding clause, wherein the flight parameter selection module is further configured to update one of the CI or cruising altitude during flight of the aircraft.

8. The flight control system of any preceding clause, wherein the flight parameter selection module is further configured to use at least one of forecasted winds or forecasted temperatures at different points along the flight path to determine the CI and cruising altitude.

9. The flight control system of any preceding clause, wherein the flight parameter selection module is further configured to perform a simulation analysis to determine an impact of weather on forecast accuracy on flight time and fuel consumption of the aircraft.

10. The flight control system of any preceding clause, wherein the flight parameter selection module is further configured to determine a single CI value and a single cruising altitude for the entire flight path.

11. The flight control system of any preceding clause, wherein the flight parameter selection module is further configured to optimize one of a cruising altitude profile or CI values when determining the CI and cruising altitude.

12. The flight control system of any preceding clause, wherein the flight parameter selection module is further configured to optimize the determined CI and cruising altitude for different portions of the flight path using forward planning at each of a plurality of waypoints.

13. The flight control system of any preceding clause, wherein the flight parameter selection module is further configured to concurrently optimize the CI and cruising altitude.

14. The flight control system of any preceding clause, wherein the flight parameter selection module is further configured to select a plurality of lateral waypoints concurrently with optimizing the CI and cruising altitude.

15. A non-transitory computer readable storage medium for flight planning using a processor, the non-transitory computer readable storage medium including instructions to command the processor to:

receive predicted weather information for a flight path;

determine a Cost Index (CI) and cruising altitude for use by a flight management system to manage an aircraft flight control, the determination based on a flight cost and the received predicted weather information for the flight path; and

provide the CI and cruising altitude to the flight management system.

16. The non-transitory computer readable storage medium of any preceding clause, wherein the instructions command the processor to perform a golden section search to determine one of the CI or the cruising altitude.

17. The non-transitory computer readable storage medium of any preceding clause, wherein the instructions command the processor to perform a nested golden section search to determine the CI and cruising altitude.

18. The non-transitory computer readable storage medium of any preceding clause, wherein the instructions command the processor to determine the CI and cruising altitude at a plurality of waypoints along the flight path.

19. The non-transitory computer readable storage medium of any preceding clause, wherein the instructions command the processor to use at least one of forecasted winds or forecasted temperatures at different points along the flight path to determine the CI and cruising altitude.

20. The non-transitory computer readable storage medium of any preceding clause, wherein the instructions command the processor to optimize one of a cruising altitude profile or CI values when determining the CI and cruising altitude.

21. The non-transitory computer readable storage medium of any preceding clause, wherein the instructions command the processor to optimize the determined CI and cruising altitude for different portions of the flight path using forward planning at each of a plurality of waypoints.

22. The non-transitory computer readable storage medium of any preceding clause, wherein the instructions command the processor to select a plurality of lateral waypoints concurrently with optimizing the CI and cruising altitude.

23. An aircraft comprising:

an airframe;

a flight management system on-board the airframe configured to manage aircraft flight control including at least one of a flight path or an altitude; and

a flight parameter selection module configured to determine a Cost Index (CI) and cruising altitude for use by the flight management system to manage the aircraft flight control, the determination based on a flight cost and predicted weather along the flight path.

24. The aircraft of any preceding clause, wherein the flight parameter selection module is configured to perform a golden section search or a nested golden section search to determine one of the CI or the cruising altitude.

25. The aircraft of any preceding clause, wherein the flight parameter selection module is configured to determine the CI and cruising altitude at a plurality of waypoints along the flight path and use at least one of forecasted winds or forecasted temperatures at different points along the flight path to determine the CI and cruising altitude.

26. The aircraft of any preceding clause, wherein the flight parameter selection module is configured to optimize the determined CI and cruising altitude for different portions of the flight path using forward planning at each of a plurality of waypoints.

**Claims**

**1.** A flight control system comprising:

a flight management system (32) configured to manage aircraft (52) flight control including at least one of a flight path or an altitude for an aircraft; and
a flight parameter selection module (34) configured to determine a Cost Index (CI) and cruising altitude for use by the flight management system (32) to manage the aircraft flight control, the determination based on a flight cost and predicted weather along the flight path.

**2.** The flight control system of claim 1, wherein the flight parameter selection module (34) is further configured to perform a golden section search to determine one of the CI or the cruising altitude.

3. The flight control system of either of claim 1 or 2, wherein the flight parameter selection module (34) is further configured to perform a nested golden section search to determine the CI and cruising altitude.

4. The flight control system of any preceding claim, wherein the flight parameter selection module (34) is further configured to determine a step climb schedule for the altitude of the aircraft (52) based on the predicted weather.

5. The flight control system of any preceding claim, wherein the flight parameter selection module (34) is further configured to determine the CI and cruising altitude at a plurality of waypoints along the flight path.

6. The flight control system of any preceding claim, wherein the flight parameter selection module (34) is further configured to use fuel consumption and flight time information when determining the CI and cruising altitude.

7. The flight control system of any preceding claim, wherein the flight parameter selection module (34) is further configured to update one of the CI or cruising altitude during flight of the aircraft (52).

8. The flight control system of any preceding claim, wherein the flight parameter selection module (34) is further configured to use at least one of forecasted winds or forecasted temperatures at different points along the flight path to determine the CI and cruising altitude.

9. The flight control system of any preceding claim, wherein the flight parameter selection module (34) is further configured to perform a simulation analysis to determine an impact of weather on forecast accuracy on flight time and fuel consumption of the aircraft.

10. The flight control system of any preceding claim, wherein the flight parameter selection module (34) is further configured to determine a single CI value and a single cruising altitude for the entire flight path.

11. The flight control system of any preceding claim, wherein the flight parameter selection module (34) is further configured to optimize one of a cruising altitude profile or CI values when determining the CI and cruising altitude.

12. The flight control system of any preceding claim, wherein the flight parameter selection module (34) is further configured to optimize the determined CI and cruising altitude for different portions of the flight path using forward planning at each of a plurality of waypoints.

13. The flight control system of any preceding claim, wherein the flight parameter selection module (34) is further configured to concurrently optimize the CI and cruising altitude, and wherein preferably the flight parameter selection module (34) is further configured to select a plurality of lateral waypoints concurrently with optimizing the CI and cruising altitude.

14. A non-transitory computer readable storage medium for flight planning using a processor, the non-transitory computer readable storage medium including instructions to command the processor to:

    receive predicted weather information for a flight path;
    determine a Cost Index (CI) and cruising altitude for use by a flight management system to manage an aircraft flight control, the determination based on a flight cost and the received predicted weather information for the flight path; and
    provide the CI and cruising altitude to the flight management system.

15. An aircraft (52) comprising:

    an airframe; and a flight control system according to any of claims 1 to 13.

FIG. 1

30

Weather Info. ─→ | Flight Parameter Selection | ─ CI ─→ | | FMS | ~ 32
Flight Time ─→ | | ─ Cruise Alt ─→ | |
| | ─ Lateral Path ─→ | |

34

# FIG. 2

40

42

46

44

# FIG. 3

FIG. 4

FIG. 5

Control Wheel
134
132
Mode Control Panel
130
Autopilot
118

Horizontal Situation Indicator
Altitude Direction Indicator
Mach/Airspeed Indicator
116
114
32
120
Symbol Generator
72
Throttle Control
Autothrottle
100
142
140

Control And Display Unit
112
110

FMS Onboard Computer Processor

Navigation Sensors
GPS
102
Intertial Sensors
104

Air Data Computer
90
Altitude
82
Speed
84
Temperature
86

Fuel Quantity
88

Memory
74
76
Stored Navigation Database
Way Point Info.
78
Parameter Settings
80
Step Climb Schedule
150

34

Weather Info. ——→ | CI Optimization | ~150

| Cruise Altitude Optimization | ~152

Flight Time ——→ | CI And Cruise Altitude Optimization | ~154 ——→ To FMS

| Cruise Altitude Profile And CI Optimization | ~156

| Lateral Path Optimization | ~158

**FIG. 6**

170

Cost

1  174
  172        182        3
      180              178
                   5
      4
   183
          2  176
0              100
            CI

**FIG. 7**

```
                                                    ┌─ 184
                                                    ▼
        ┌──────────────────────────┐
        │  Specify Maximum And     │
        │  Minimum CI Or Cruising  │ ─── 185
        │  Altitude Values         │
        └──────────────────────────┘
                     │
                     ▼
        ┌──────────────────────────┐
        │  Use Known FMS Input     │ ─── 186
        │  Parameters              │
        └──────────────────────────┘
                     │
                     ▼
        ┌──────────────────────────┐
        │  Perform Golden Section  │ ─── 187
        │  Search                  │
        └──────────────────────────┘
                     │
                     ▼
        ┌──────────────────────────┐
        │  Determine CI Or Altitude│ ─── 188
        │  For Entire Flight       │
        └──────────────────────────┘
```

## FIG. 8

```
                                                    ┌─ 190
                                                    ▼
        ┌──────────────────────────┐
        │  Specify Maximum, Minimum│
        │  And Default Values For  │ ─── 192
        │  Cruise Altitude And CI  │
        └──────────────────────────┘
                     │
                     ▼
        ┌──────────────────────────┐
        │  Use Known Flight Path And│ ─── 194
        │  FMS Input Parameters    │
        └──────────────────────────┘
                     │
                     ▼
        ┌──────────────────────────┐
        │  Perform Nested Golden   │ ─── 196
        │  Section Search          │
        └──────────────────────────┘
                     │
                     ▼
        ┌──────────────────────────┐
        │  Determine Cruise Altitude│ ─── 198
        │  And CI For Entire Flight │
        └──────────────────────────┘
```

## FIG. 9

FIG. 10

FIG. 11